(19) Europäisches Patentamt / European Patent Office / Office européen des brevets

(11) EP 3 071 617 B1

(12) FASCICULE DE BREVET EUROPEEN

(45) Date de publication et mention
de la délivrance du brevet:
**31.10.2018 Bulletin 2018/44**

(21) Numéro de dépôt: **14821697.1**

(22) Date de dépôt: **13.11.2014**

(51) Int Cl.:
**C08G 18/62** (2006.01)    **C09D 175/04** (2006.01)
**C08L 33/06** (2006.01)    **C08G 18/36** (2006.01)

(86) Numéro de dépôt international:
**PCT/FR2014/052892**

(87) Numéro de publication internationale:
**WO 2015/071600 (21.05.2015 Gazette 2015/20)**

(54) **COMPOSITIONS RETICULABLES DE POLYURETHANES 2 K A FAIBLE TAUX DE COV.**

VERNETZBARE POLYMERZUSAMMENSETZUNG VON 2K-POLYURETHANEN MIT GERINGEM VOC-GEHALT

CROSSLINKABLE COMPOSITIONS OF 2K POLYURETHANES WITH LOW VOC CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2013 FR 1361269**

(43) Date de publication de la demande:
**28.09.2016 Bulletin 2016/39**

(73) Titulaire: **Arkema France**
**92700 Colombes (FR)**

(72) Inventeurs:
• **PIERRE, Aurélie**
**F-75018 Paris (FR)**
• **DELMAS, Grégory**
**F-60300 Senlis (FR)**

(74) Mandataire: **Killis, Andréas**
**ARKEMA France**
**Département Propriété Industrielle**
**420, rue d'Estienne d'Orves**
**92705 Colombes Cedex (FR)**

(56) Documents cités:
**EP-A2- 0 882 750    WO-A1-2007/020269**

• **"Polycin D-290 Technical Data Sheet", , 30 octobre 2008 (2008-10-30), XP055124337, Extrait de l'Internet: URL:http://www.groshea.com/pdf/Vertellus/G ROShea_Vertellus_polycin d-290_tech data.pdf [extrait le 2014-06-19]**

EP 3 071 617 B1

**Description**

La présente invention concerne d'abord une composition spécifique de résine polyol utilisable comme composant réactif avec un polyisocyanate dans une composition réticulable de polyuréthane, en particulier composition de revêtement réticulable bicomposant polyuréthane ayant un faible taux de composés organiques volatils en particulier < 250 g/l à une viscosité d'application prise comme référence de 450 mPa.s à 25°C, sans changement significatif du niveau de performances applicatives finales et concerne également une composition réticulable de polyuréthane, en particulier de revêtement comprenant ladite composition de résine et également l'utilisation de ladite composition pour lesdits revêtements polyuréthanes.

Ladite viscosité de 450 mPa.s n'est pas une limitation de la viscosité de la composition de revêtement mais une viscosité servant de référence pour la présente invention pour déterminer le taux lié de composés organiques volatils (COV) comme défini ci-après.

Le terme COV signifie selon la présente invention les composés organiques volatils remplissant les critères suivants pour les besoins de la présente invention : ayant une température d'ébullition (TEb) à pression atmosphérique < 250°C et sélectionnés parmi les diluants inertes ou non réactifs, c'est-à-dire (non réactifs) ne portant aucun groupement susceptible de réagir avec un isocyanate ou parmi les diluants monofonctionnels réactifs porteurs d'un groupement susceptible de réagir avec un groupement isocyanate.

Afin d'anticiper l'application des réglementations futures de plus en plus strictes en termes de respect de l'environnement et de la santé, les taux des composés organiques volatils COV doivent être de plus en plus faibles pour les applications en milieu solvant organique. C'est pourquoi le marché de revêtements industriels axe de plus en plus les nouveaux développements sur des formulations solvantées (milieu solvant organique) à très haut extrait sec (ou taux de solides) permettant de répondre à de telles exigences. Dans le cadre de la présente invention, on vise en particulier des compositions de revêtements ayant un taux de COV comme défini ci-haut, inférieur à 250 g/l à une viscosité de référence d'application de 450 mPa.s à 25°C.

Aux Etats-Unis, cette cible peut être atteinte grâce à l'utilisation de l'acétone comme solvant de dilution, exempt de la réglementation COV aux U.S.A. Cependant, le marché de revêtements industriels de protection étant à considérer dans un contexte international, une solution globale susceptible de répondre à toutes les exigences du marché international, en particulier européen où la réglementation est plus stricte dans la définition de COV, par exemple avec l'acétone étant incluse dans la définition des COV, doit être envisagée.

La diminution des taux de COV dans les compositions de revêtement fait l'objet de nombreux brevets depuis plusieurs années. Par exemple, WO 01/38415 décrit une composition pour revêtement polyuréthane à bas niveau de COV et un bon niveau de performances en dureté initiale et résistance chimique pour application dans le domaine des véhicules. Cependant, les compositions décrites ont des taux de COV bien supérieurs à 250 g/l.

De même, EP 1 178 080 décrit des compositions à base de résines polyols mais avec des taux de COV supérieurs à 250 g/l.

US 6,015,871 décrit une composition thermodurcissable à haut extrait sec à base d'une résine polyol et présence de diluant réactif pour revêtements présentant une bonne durabilité, un niveau de brillant élevé et une bonne résistance chimique avec un faible niveau de COV. Cependant, ledit faible niveau de COV décrit ne tient pas compte du taux de solvants volatils comme l'acétone et donc le taux effectif de COV selon la définition donnée ci-haut est beaucoup plus élevé que 250 g/l. WO2007/020269 décrit des compositions comprenant un copolymère polyacrylate polyol, un polyester polyol et un réticulant polyisocyanate, et décrit des revêtements réticulables bicomposants polyuréthanes à faible teneur en COV.

La composition de la présente, telle que décrite dans les revendications, permet de limiter l'utilisation de COV selon la définition donnée ci-dessus, comme l'acétone tout en maintenant un niveau de performances équivalent au niveau des performances des formulations « à haut extrait sec standard » ayant un taux de COV d'environ 420 g/l. L'invention réside dans la combinaison sélective des 3 composants essentiels : d'une résine acrylique polyol spécifique solvantée (en milieu solvant organique), d'un diluant spécifique réactif par rapport à l'isocyanate et d'un système catalytique pour une réaction avec un composant polyisocyanate, lequel en particulier est spécifiquement sélectionné également. En l'absence de ladite combinaison sélective, le niveau de COV visé ne peut être atteint, ni les propriétés requises pour le marché de revêtement industriels de protection.

La formulation de revêtements qui est à base de ladite composition de résine et d'un polyisocyanate sélectionné en particulier spécifiquement a un taux de COV comme défini ci-haut inférieur à 250 g/l à une viscosité de référence (d'application) de 450 mPa.s à 25°C et présente des performances applicatives de séchage et de développement de dureté au moins équivalentes aux systèmes standards dits « haut extrait sec » qui ont un taux de composés organiques volatils plus élevé, correspondant en particulier (systèmes actuels de « haut extrait sec ») à un niveau de COV de 420 g/l à la viscosité de référence (d'application). En effet, la diminution du niveau de COV d'une formulation est généralement atteinte par la diminution des masses moléculaires de la résine mais entraine ainsi la détérioration des propriétés du revêtement, comme la vitesse de séchage, le développement de dureté, la résistance chimique, la durabilité et les performances mécaniques. La dilution avec des diluants inertes volatils (TEb < 250°C sous pression atmosphérique) augmente le taux de COV et les risques pour l'environnement et la santé. D'autre part, l'utilisation de diluants monofonctionnels réactifs par rapport aux isocyanates et volatils, par exemple monoalcools légers, malgré la possibilité de réduction de la viscosité de la formulation et la possibilité de réaction avec l'isocyanate, d'abord ne réduit pas le risque pour l'environnement et la santé (étant volatils) et surtout détériore les performances mécaniques par la réduction du taux de réticulation (agent bloquant vs polyisocyanates) et présente en plus comme effet négatif la surconsommation de polyisocyanates. La présente invention, par la limitation de ces diluants volatils et le choix spécifique des composants de la composition de résine et du polyisocyanate de la composition réticulable, permet de remédier aux inconvénients des solutions de l'état de la technique avec un très bon compromis dans l'obtention d'une composition de revêtement industriel de protection, avec un très bas taux de COV et en même temps avec un niveau de performances au moins équivalent à celui des systèmes actuellement connus à taux de COV plus élevé et donc sans affectation significative de performances applicatives finales.

Plus particulièrement, la présente invention permet selon un mode particulier d'améliorer la durée de vie en pot (« pot life ») de la composition de revêtement. Le catalyseur étant présent dans la composition, il permet d'accélérer la réaction et d'augmenter donc la vitesse de réticulation lors de l'application et donc la vitesse de séchage. Cependant, il réduit en même temps la durée de vie en pot ou « pot life » de la composition réticulable en particulier de revêtement et plus particulièrement de vernis, lasure de peinture ou d'encre. Encore plus particulièrement, la présente invention permet également par une encapsulation, en particulier nanoencapsulation du catalyseur d'uréthanisation, d'augmenter la durée de vie en pot (« pot life »). Le principe de l'encapsulation du catalyseur consiste à enrober (piéger) le catalyseur dans des nanocapsules qui sont présentes dans la composition de revêtement avec ladite composition de résine polyol. Celles-ci permettent ainsi selon ce mode particulier, de masquer (bloquer) l'activité du catalyseur lors de la formulation et donc de ne pas catalyser en pot la réaction de la résine polyol et dudit diluant réactif avec le polyisocyanate, lesdites nanocapsules libérant ensuite ledit catalyseur, par exemple par rupture lors du passage de la formule par la buse du pistolet d'application surtout à fort cisaillement. Les propriétés de séchage sont ainsi conservées et la durée de vie en pot allongée. Pour ce faire, les nanocapsules doivent présenter une structure et une taille particulière permettant une bonne stabilité au cisaillement lors des étapes de préparation de la résine et de la formulation mais par principe une résistance faible au cisaillement plus élevé du pistolet d'application. Par ailleurs, la nanocapsule ne doit pas être perméable afin d'éviter la diffusion du catalyseur pendant la durée de stockage de la résine mais aussi de la formulation. Donc, cette variante particulière de l'invention permet en plus d'améliorer la durée de vie en pot (« pot life ») de la formulation et ainsi de l'ajuster aux conditions d'application finale.

La présente invention couvre d'abord une composition spécifique de résine polyol à base d'un mélange de monomères éthyléniquement insaturés, en particulier résine polyol acrylique permettant la mise en oeuvre d'une composition réticulable de polyuréthane à faible taux de COV et < 250 g/l.

Ensuite, l'invention concerne une composition réticulable à base de ladite composition de résine et d'un polyisocyanate.

Un autre objet de l'invention concerne une composition de revêtement à base de ladite composition de résine et plus précisément à base de ladite composition réticulable.

Fait également partie de l'invention, l'utilisation de ladite composition de résine comme composant réactif avec un polyisocyanate, pour des revêtements polyuréthanes bicomposants (2k) à faible taux de COV et < 250 g/l.

Finalement, l'invention couvre également le produit fini, polyuréthane réticulé en particulier sous forme de revêtement, résultant de ladite utilisation.

Donc, le premier objet de la présente invention concerne une composition de résine polyol, en particulier apte à réagir avec un isocyanate, laquelle composition de résine comprend les composants suivants :

a) au moins une résine polyol, en particulier acrylique, obtenue par polymérisation d'un mélange de monomères éthyléniquement insaturés comprenant a1) au moins un monomère éthyléniquement insaturé hydroxylé, acrylique ou un monomère précurseur d'une unité hydroxylée, modifié chimiquement lors de ladite polymérisation ou après et a2) au moins un monomère éthyléniquement insaturé, en particulier acrylique, de structure cycloaliphatique et ladite résine a) ayant les caractéristiques suivantes :

-    un indice de OH allant de 50 à 200, de préférence de 50 à 175 mg KOH/g (g ici signifie g de résine sèche)
-    un indice d'acide < 10 et plus préférentiellement < 5 mg KOH/g
-    Tg calculée selon Fox supérieure à 25°C, de préférence de 30 à 90°C
-    Mn allant de 1000 à 4000, telle que mesurée par GPC

b) au moins un diluant réactif portant par molécule au moins deux groupements de préférence de 2 à 4, plus préférentiellement de 2 à 3 groupements susceptibles de réagir avec un groupement isocyanate
c) au moins un catalyseur de réaction d'uréthanisation, éventuellement en présence d'un cocatalyseur, en particulier c) étant nanoencapsulé, de préférence c) étant exempt d'étain

d) en option, au moins un diluant de point d'ébullition (pt Eb) inférieur à 250°C à pression atmosphérique qui est choisi parmi les diluants inertes ou non réactifs (c'est-à-dire ne portant aucun groupement pouvant réagir avec un isocyanate) ou parmi les diluants monofonctionnels réactifs porteurs d'un groupement susceptible de réagir avec un groupement isocyanate, en particulier ledit diluant d) étant le solvant résiduel de polymérisation de ladite résine a)

e) en option, au moins un additif parmi : anti-UV, antioxydant, extendeur de durée de vie en pot (« pot life »), additif de conductivité ou inhibiteur de corrosion

avec ladite composition ayant un taux de composé d) correspondant au taux de composés organiques volatiles (COV) inférieur à 300 g/l à 450 mPa.s à 25°C.

La Mn (masse moléculaire moyenne en nombre) comme les autres masses moléculaires citées sont données en g/mole (ou Daltons). L'indice de OH ou l'indice d'acide en mg KOH/g sont donnés par rapport à la résine sèche (par g de résine sèche).

La Mn de ladite résine a) est mesurée par GPC (ou SEC) dans le THF en équivalents polystyrène, utilisé comme étalon.

De préférence, le taux en poids dudit monomère de structure cycloaliphatique a2) est d'au moins 5% et inférieur à 80% en poids par rapport au poids total des monomères de ladite résine a).

En particulier, ledit diluant réactif b) a une Tg mesurée par DSC et plus précisément à 10°C/min après 2 passages, inférieure à -50°C, de préférence allant de -100 à moins de -50°C et plus préférentiellement de -90°C à moins de -50°C.

Plus particulièrement, ledit diluant b) est présent à un taux tel que le rapport en % poids de b/(a+b+c+d+e) varie jusqu'à 60%, de préférence jusqu'à 50%, plus préférentiellement de 5 à 50% avec la somme de a)+b)+c)+d)+e) étant égale à 100%. Plus particulièrement, ledit diluant réactif b) a une masse moléculaire qui ne dépasse pas 1000 et une fonctionnalité moyenne (en nombre) allant de 2 à moins de 4, de préférence de 2 à 3 et plus préférentiellement entre 2 et 2,75. Ladite masse moléculaire dudit diluant b) correspond soit à la masse molaire calculable à partir d'une formule (brute) précise ou par la masse équivalente et la fonctionnalité connues, soit mesurée par GPC (ou SEC) dans le THF et exprimée en équivalents polystyrène et dans ce cas, elle correspond à la masse moléculaire moyenne en nombre Mn comme par exemple celle mesurée dans le cas de ladite résine polyol, en particulier acrylique a).

Ladite résine polyol, en particulier acrylique a), est plus particulièrement un copolymère dérivé de la polymérisation radicalaire dans un diluant d), d'un mélange de monomères éthyléniquement insaturés, comprenant en plus de a1) et de a2) tels que définis ci-haut, a3) au moins un comonomère sélectionné parmi les autres monomères éthyléniquement insaturés, en particulier parmi les monomères (méth)acryliques et/ou monomères vinyliques, de préférence ledit mélange de monomères étant à base de monomères (méth)acryliques. Le terme « polyol acrylique » signifie qu'il comprend au moins un monomère « acrylique » avec « acrylique » signifiant à la fois acrylates ou méthacrylates ou leurs mélanges.

Comme monomères a1), on peut citer: les hydroxy alkyl (méth)acrylates avec alkyl en $C_1$ à $C_4$, éventuellement alcoxylé, tels que l'acrylate de 2-hydroxyéthyle, le méthacrylate de 2-hydroxyéthyle, le méthacrylate d'hydroxypropyle, l'acrylate d'hydroxybutyle.

Comme monomères précurseurs d'unité hydroxylée, on peut citer par exemple des monomères carboxylés tels que l'acide (méth)acrylique, maléique, fumarique, itaconique, tetrahydrophtalique, modifiés, soit lors de la polymérisation, soit après la polymérisation par un composé monoépoxydé, formant comme unité hydroxylée un hydroxy ester, avec l'hydroxy en position alpha dudit ester. De même, ledit monomère précurseur peut être un monomère époxydé, avec modification dudit époxy lors de la polymérisation ou après par réaction avec un monoacide et donnant comme unité hydroxylée dans ladite résine polyol une unité analogue hydroxy ester. De même, les monomères précurseurs peuvent être des monomères comportant une fonction amine pouvant réagir de manière analogue avec un composé monoépoxydé pour donner comme unité hydroxylée un hydroxy adduit d'amine sur ledit époxy.

Comme monomères convenables a2), on peut citer : les (méth)acrylates de norbornyle, d'isobornyle, d'isophoryle, de cyclohexyle, de dicyclopentadiényle, décahydronaphtalényle.

Comme monomères a3) convenables, on peut citer : les esters (méth)acryliques issus d'un alcool aliphatique en $C_1$ à $C_{18}$, de préférence en $C_1$ à $C_{12}$, les monomères vinyliques, de préférence les esters en $C_1$ à $C_{18}$ de l'alcool vinylique.

Dans la composition de résine selon l'invention, ladite résine polyol a) est de préférence présente à un taux tel que le rapport en poids a/(a+b+c+d+e) varie de 40 à 90% et de préférence de 50 à 90% avec la somme de a)+b)+c)+d)+e) étant égale à 100%.

Ledit diluant réactif b) peut être sélectionné parmi :

b1) les alcanes polyols ou alcanes polyamines à chaîne linéaire ou ramifiée, alcoxylés ou non alcoxylés, de préférence ayant une longueur de chaîne en $C_2$ à $C_{54}$, plus préférentiellement polyols en $C_{12}$ à $C_{54}$

b2) les polyols dérivés d'huiles naturelles ou dérivés des acides gras correspondants, en particulier avec une longueur de chaîne allant de $C_{12}$ à $C_{54}$

b3) les oligoéthers polyols ou oligoimines polyamines

b4) les oligoesters polyols, en particulier à base de caprolactone ou de glycidyl ester de l'acide néodecanoïque, en particulier connu sous le nom commercial de Cardura® E10 commercialisé par Momentive

b5) les oligouréthane polyols

b6) les polyoxazolidines, en particulier les bisoxazolidines et de préférence le diluant b) est choisi parmi b2) et/ou b3) et/ou b6).

Concernant ledit catalyseur c), il peut être choisi parmi :

c1) les sels métalliques ou complexes métalliques à base de métaux choisi parmi : Bi, Ti, Zn, Zr, Sn, de préférence Bi, Ti, Zn, Zr

c2) les amines tertiaires

et de préférence c) est choisi parmi c1) les sels ou complexes métalliques de Ti ou de Zr et parmi c2) les amines tertiaires.

Concernant ledit diluant d), il peut être choisi parmi :

d1) les monoesters d'acides en $C_2$-$C_4$ avec des alcools (linéaires ou ramifiés), en particulier l'acétate d'éthyle, acétate de butyle, acétate d'isoamyle, acétate de pentyle, ethyl 3-éthoxy proprionate d'éthyle, acétate de 1-méthoxy-2-propyle

d2) les diesters d'acides dicarboxyliques avec des alcools en $C_1$-$C_4$, en particulier esters d'acides adipique, glutarique et succinique avec le méthanol, l'éthanol, l'(iso)propanol, l'(iso)butanol

d3) les cétones, en particulier l'acétone, butanone, méthyl éthyl cétone, méthyl amyl cétone, méthyl isobutyl cétone, cyclohexanone, isophorone

d4) les solvants aromatiques, en particulier les coupes lourdes ou légères pétrolières ayant des plages respectives de points d'ébullition de 180 - 215°C et de 150 - 180°C, le toluène et le xylène et ses isomères

d5) les autres solvants aliphatiques tels que les alcanes d'au moins en $C_6$, comme l'hexane, l'heptane ou l'octane

d6) les solvants mixtes, c'est-à-dire comportant des hétéro-atomes en particulier, le diméthyl sulfoxide (DMSO), N-éthyl pyrrolidone (NEP), tétrahydrofuranne (THF)

d7) les alcools monofonctionnels de point d'ébullition < 250°C, en particulier le butanol, propanol, isopropanol, monoéthers de diols en $C_2$ à $C_4$ avec un alcool en $C_1$ à $C_4$, tel que le 2-butoxyéthanol, lesdits alcools d7) n'étant présents qu'en mélange avec au moins un autre diluant d) et ne représentant pas plus de 10%, de préférence pas plus de 5% du total en poids de d)

d8) un mélange binaire ou ternaire desdits solvants cités ci-haut, d1) à d7) sous condition de compatibilité entre lesdits solvants et aussi entre lesdits mélanges de solvants et les autres composants de ladite composition de résine.

La compatibilité entre diluants d) telle que décrite ci-dessus signifie l'absence de démixtion à la température ambiante qui correspond à la température d'utilisation.

La résine polyol a) peut également être caractérisée par une viscosité de 500 à 5000 mPa.s à 25°C pour un taux en poids de ladite résine a) de 70 ($\pm$ 1) % par rapport au total résine + solvant, de préférence ledit solvant étant tel que défini selon d), en particulier selon d1) et plus particulièrement l'acétate de butyle.

Le deuxième objet de l'invention concerne une composition réticulable de polyuréthane, laquelle composition réticulable comprend :

A) au moins une composition de résine polyol telle que définie ci-haut selon l'invention, en tant que composant réactif avec un polyisocyanate B) tel que défini ci-dessous

B) au moins un polyisocyanate de fonctionnalité (moyenne en nombre) en groupements NCO d'au moins 2, de préférence supérieure à 2, plus préférentiellement entre 2 et 4, ledit polyisocyanate étant éventuellement bloqué et/ou encapsulé.

et de préférence les proportions de A) et B) étant telles que le rapport du nombre total f des fonctions réactives OH de a) et des fonctions de b) réactives avec NCO sur le nombre total des fonctions isocyanates NCO (f/NCO) varie de 0,8 à 1,3, de préférence de 0,9 à 1,1.

La fonctionnalité moyenne en nombre est en particulier valable s'il s'agit de mélange de prépolymères polyisocyanates.

Un polyisocyanante bloqué signifie un isocyanate dont les fonctions NCO sont bloquées par un agent bloquant labile, dans les conditions d'application ou d'usage final de la composition. Comme exemple d'agent bloquant convenable, on peut citer la méthyl éthyl cétone oxime.

Un polyisocyanate encapsulé signifie qu'il est contenu dans des microcapsules et de préférence nanocapsules solubles progressivement dans le milieu solvant de la composition réticulable et libérant ainsi progressivement ledit polyisocyanate et permettant le contrôle de la durée de vie en pot en fonction de l'usage final. Les nanocapsules contenant ledit polyisocyanate peuvent également se briser par cisaillement mécanique de la paroi par exemple lors de l'application de ladite composition par des moyens générant un tel fort cisaillement comme par exemple lors de l'application par projection au pistolet. Les techniques de microencapsulation et en particulier de préparation de composants réactifs ou non réactifs microencapsulés sont bien connues de l'homme du métier dans les diverses formulations réactives ou non réactives. Par exemple, le document Macromolecules 2008, 41, 9650-9655 décrit l'encapsulation de polyisocyanates, en particulier pour usage dans des polymères autocicatrisants.

La composition réticulable selon l'invention a en particulier un taux de composés d) correspondant au taux de composés organiques volatils (COV) comme définis selon l'invention qui est inférieur à 250 g/l.

Toujours concernant ladite composition réticulable, ledit polyisocyanate B) peut être sélectionné parmi les polyisocyanates aliphatiques ou cycloaliphatiques, en particulier modifiés allophanate. Modifié allophanate signifie ici comprenant au moins un groupement allophanate. L'allophanate résulte en fait de la réaction d'un isocyanate avec un uréthane, obtenu par réaction entre un alcool et un isocyanate, conduisant ainsi au greffage dudit isocyanate sur ledit uréthane sous forme d'allophanate par réaction avec un groupement NH dudit uréthane.

Ledit polyisocyanate peut selon une variante comprendre un cycle isocyanurate.

Selon un mode particulier, ledit polyisocyanate est de structure aliphatique et il peut être entre autres un polyisocyanate modifié allophanate.

Plus particulièrement, ledit polyisocyanate B) est un polyisocyanate modifié allophanate, avec une structure suivant la formule générale (I) suivante :

$$O=C=N-R_1-N(R_2)-C(=O)-NH-R_1-N=C=O \qquad (I)$$

avec

$R_1$ : alkylène ou cycloalkylène en $C_6$, de préférence alkylène en $C_6$

$R_2$ : $-C(=O)-OR_3$, avec $R_3$ étant le résidu d'un alcool en $C_6$ à $C_{36}$, de préférence alcool gras en $C_{12}$ à $C_{36}$.

Selon une autre possibilité, ledit polyisocyanate est de structure cycloaliphatique.

Le troisième objet de l'invention concerne une composition de revêtement qui comprend au moins une composition réticulable de polyuréthane telle que définie selon l'invention ci-avant. De préférence, ladite composition est une composition de revêtements de protection ou de décoration. Plus particulièrement préférée, cette composition est une composition de peintures, vernis, lasures ou d'encres. Ladite composition de revêtement peut comprendre en plus de ladite composition réticulable, des pigments qui peuvent être organiques ou inorganiques, charges minérales en particulier $CaCO_3$, $BaSO_4$, silice, alumine, talc ou des additifs de rhéologie, des agents mouillants, des dispersants, des agents de surface , des agents anti-UV et dans ce cas en plus de ceux (agents anti-UV) présents avec ladite composition de résine polyol ou des antioxydants, des inhibiteurs de corrosion, absorbeur d'humidité tel que des alcoxysilanes ou des agents antimousse.

Selon une variante particulièrement préférée, ladite composition de revêtements selon l'invention concerne des revêtements anticorrosion pour métal.

Un autre objet de la présente invention concerne l'utilisation d'une composition telle que définie plus haut selon l'invention, comme composant réactif avec un polyisocyanate, dans des compositions réticulables de revêtements polyuréthanes, avec un taux de COV comme définis ci-haut et selon l'invention, de ladite composition de revêtements inférieur à 250 g/l. Selon une préférence particulière, ladite utilisation est pour des revêtements de protection ou de décoration de substrats. Lesdits substrats peuvent être choisis parmi : métal, verre, plâtre, béton, composite, plastique, bois y compris aggloméré, carton, bitume, fibres ou textile.

Les substrats couvrent entre autres une utilisation pour la protection d'une argenture (couche ou revêtement fin d'argent) supportée par le verre dans le cas d'un miroir argenté ou par un autre support argenté pour les mêmes raisons de protection, en particulier anticorrosion (préventive de l'oxydation) de l'argent.

Finalement, l'invention couvre également un produit fini qui est en particulier un polyuréthane réticulé, plus particulièrement sous forme de revêtement, lequel résulte de l'utilisation d'une composition de résine polyol ou d'une composition réticulable telles que définies ci-haut selon l'invention ou d'une composition de revêtement telle que définie ci-avant selon l'invention.

L'exemple suivant est présenté à titre d'illustration de la présente invention, sans aucune limitation de sa couverture.

Partie expérimentale

1) Matières premières utilisées et origine : voir tableau 1

Tableau 1 : liste des matières premières utilisées

| Nom chimique ou nom commercial produit | Nom abrégé utilisé dans description | Fournisseur | Fonction dans la composition de résine |
|---|---|---|---|
| Styrène | STY | Total | Monomère a3) du polyol a) |
| Acrylate de butyle | ABu | Arkema | Monomère a3) du polyol a) |
| Méthacrylate d'Isobornyle | MAISOBOR | Evonik | Monomère a2) du polyol a) |
| Méthacrylate d'hydroxypropyle | HPMA | Evonik | Monomère a1) du polyol a) |
| Acide Méthacrylique | AMA | Arkema | Monomère a3) du polyol a) |
| Luperox® DI | DTBP | Arkema | Générateur de radicaux |
| Acétate de Butyle | - | Brenntag | Diluant d1) |
| Polycin® D-290 | - | Vertellus | Diluant réactif b2) |
| TIB KAT 218 | DBTDL | TIB Chemicals | Catalyseur c1) |
| Tolonate® HDT-LV2 | - | Vencorex | Réticulant polyisocyanate avec cycle isocyanurate (trimère HMDI) avec % poids NCO = 23 |

Les caractéristiques de la Polycin® D-290, polyol dérivé de l'huile de ricin, sont données dans le tableau 2 ci-dessous.

Tableau 2 : caractéristique du diluant réactif Polycin® D-290

| Caractéristiques | Polycin® D-290 |
|---|---|
| Taux de solides (%) | 100 |
| Fonctionnalité OH | 2 |
| Poids équivalent (g) | 193 |
| Masse moléculaire (g/mol)* | 386 |
| Tg (°C)** | -73 |
| * obtenue par calcul à partir des données de la fiche technique commerciale<br>** mesurée par DSC | |

2) Préparation de la résine acrylique polyol

Exemple 1a selon l'invention

Dans un réacteur de 2000 mL pouvant fonctionner sous pression est introduit, après inertage du milieu au diazote, de l'acétate de butyle (240 g). Le milieu réactionnel est porté à 170°C. La pression à l'intérieur du réacteur est d'environ 2 bars absolus. En parallèle, 491 g de styrène, 264 g d'acrylate de butyle, 315 g de méthacrylate d'hydroxypropyle, 120 g de méthacrylate d'isobornyle et 9,4 g d'acide méthacrylique sont mélangés. Est préparée également une solution de peroxyde de ditertiobutyle (59,5 g) dans de l'acétate de butyle (139 g). Ces deux préparations sont alors introduites en parallèle dans le réacteur sur une période de 6 h, la température étant maintenue à 170°C pendant toute la durée d'ajout. A la fin de ces additions, les lignes d'introduction des monomères et de l'initiateur sont rincées avec 42 g environ d'acétate de butyle. Le milieu est gardé à la même température pendant 1 h, avant d'être refroidi à température ambiante. L'extrait sec final de la résine (% en poids de solides) mesuré selon la méthode ISO 3251 (précisément, 1 g de solution de résine) est introduit et correctement étalé dans une coupelle en aluminium et la coupelle est ensuite placée dans une étuve à 125°C et séchée pendant 1 h, l'extrait sec étant le % du poids sec ainsi obtenu par rapport au poids initial de la solution de résine est alors de 73,2% et sa viscosité correspondant à cet extrait sec, mesurée à 25°C selon la norme ISO 3219, est de 2440 mPa.s.

Tableau 3 : Composition en monomères et caractéristiques de la résine acrylique polyol a) de l'invention

| Composition (% en poids) | Exemple 1a invention |
|---|---|
| STY | 40,9 |
| ABu | 22,0 |
| HPMA | 26,3 |
| MAISOBOR | 10,0 |
| AMA | 0,8 |
| Caractéristiques | |
| Extrait sec (%) | 73,2 |
| Viscosité (mPa.s) | 2440 |
| Fonctionnalité hydroxyle calculée (mg KOH/g) | 102 |
| Indice d'acide (mg KOH/g) | 8,2 |
| Tg Fox (°C) | 49 |
| Mn (g/mol) | 1960 |
| Mw (g/mol) | 3560 |

3) Préparation de la composition de résine polyol

Mode opératoire et compositions préparées et caractéristiques. Voir tableau 3.

Exemple 1b selon l'invention

38,9 g de résine acrylique polyol de l'exemple 1a de l'invention sont introduits dans un mélangeur. 5,10 g d'acétate de butyle y sont ajoutés pour dilution, puis 9,49 g de Polycin® D-290. L'ensemble est mélangé pendant 10 minutes. Puis est introduit 0,114 g de DBTDL (1,14 g d'une solution à 10% dans l'acétate de butyle).

Tableau 4 : Composition de polyol, exemple 1b selon l'invention

| | Exemple 1b |
|---|---|
| Exemple 1a (g) | 38,9 |
| Polycin® D-290 (g) | 9,49 |
| Acétate de Butyle (g) | 5,10 |
| Catalyseur (DBTDL) : Solution diluée à 10% dans l'acétate de butyle | 1,14 |

4) Préparation de la formulation de vernis réticulable de revêtement

Exemple 1c selon l'invention

La formulation de l'exemple 1c se fait en mélangeant sous agitation (disperseur) entre 1000 - 1200 tours/min à 23°C dans un pot métallique, la quantité requise de la résine de l'exemple 1b avec la quantité requise du Tolonate® HDT-LV2 (voir tableau 5). L'agitation est maintenue durant 2 minutes.

Tableau 5 : Formulation de vernis réticulable de revêtement et caractéristiques

|  | Formulation de l'exemple 1c |
|---|---|
| Exemple 1b (g) | 54,63 |
| Tolonate® HDT-LV2 (g) | 17,84 |
|  |  |
| Caractéristiques |  |
| Viscosité (mPa.s) à 25°C CAP 1000 (Aiguille n°3) | 304 |
| Densité (g/ml) | 1,01 |
| Extrait sec calculé (%) | 77,0 |
| COV calculé (g/l) | 232 |

L'extrait sec calculé correspond au taux de solides (c'est-à-dire : 100 - % poids composés volatils selon d)).

5) Tests utilisés pour l'évaluation des caractéristiques de la composition ou des performances du revêtement

5.1) Mesure de la viscosité selon la méthode ISO 3219

La viscosité des résines solvantées est mesurée à l'aide d'un Brookfield LVDV-I+, à l'aide du mobile S34, à 25°C.

5.2) Mesure de l'indice d'acide de la résine polyol acrylique selon la méthode ISO 2114

L'indice d'acide est mesuré par titration d'un échantillon de résine ou de composition, de masse déterminée, solubilisé dans un mélange xylène/propan-2-ol et additionné de quelques gouttes de phénolphtaléine, indicateur coloré permettant l'identification du point équivalent. La solution titrante utilisée est une solution de potasse alcoolique à 0.1 M. L'indice d'acide (IA) est exprimé en mg KOH/g de résine sèche et obtenu par de la façon suivante :

$$IA = \frac{C \times V_{eq} \times 56,1}{m \times ES} \times 100$$

où C est la concentration de la solution de potasse en mol/l
$V_{eq}$ est le volume de solution titrante versée à l'équivalence en ml
56,1 est la masse moléculaire de la potasse en g/mol
m est la masse de l'échantillon de résine ou de composition en g

ES est l'extrait sec ou taux de la résine en % poids par rapport à la solution de résine a) telle qu'obtenue selon l'exemple 1a.

5.3) Fonctionnalité en groupement hydroxyle (ou indice d'hydroxyle) de la résine acrylique polyol a), exprimée en mg KOH/g de résine sèche

Elle est obtenue par calcul à partir du bilan matière des fonctions hydroxyles incorporées avec le monomère porteur de ladite fonction par rapport au poids de l'ensemble des monomères constituant ladite résine polyol a).

5.4) Mesure de la Tg

La Tg du diluant b) est mesurée par l'analyse DSC qui est réalisée sur un équipement DSC1 Mettler Toledo, en programmation de température à 10°C/min, avec un balayage de -130°C à 0°C (balayage sous azote). Les valeurs de Tg retenues sont celles du second passage.

Par contre, la Tg de la résine acrylique polyol a) est calculée par la loi de Fox :

$$\frac{1}{Tg} = \sum_i \frac{w_i}{Tg_i}$$

où Tg et $Tg_i$ sont exprimés en °K

i renvoie au monomère i, $w_i$ est sa fraction massique (en poids) dans le copolymère et $Tg_i$ est la Tg de l'homopolymère du monomère i. La somme de $w_i$ est égale à 1.

Tableau 6 : Tg utilisées dans la loi de Fox pour les homopolymères des monomères composants

| Monomères | Tg Fox (°C) |
|---|---|
| STY | 100 |
| ABu | -54 |
| HPMA | 72 |
| MAISOBOR | 170 |
| AMA | 228 |

5.5) <u>Mesure des masses moléculaires de la résine acrylique polyol a)</u>

Elles sont obtenues par analyse par chromatographie d'exclusion stérique (SEC ou GPC) dans le THF. Les conditions d'analyse utilisées sont les suivantes :

- Colonnes « faibles masses » (2 colonnes mixtes D + 1 colonne 100Å + 1 colonne 50Å)
- Débit de phase mobile (THF) : 1 ml/min, T° : 35°C, détection RI
- Calibration : étalons PS (Mw : 371 100, 230 900, 96 000, 51 150, 21 810, 10 440, 4 910, 3 180, 1 280, 580, 162 g.mol$^{-1}$).

5.6) <u>Test de séchage hors poussières selon la méthode ISO 1517</u>

Le principe est le suivant : à l'aide de fines billes de verre calibrées (granulométrie 125 / 250 $\mu$m), on détermine le moment à partir duquel celles-ci ne restent plus collées au support recouvert de peinture ou de vernis. On place le support recouvert de la peinture ou du vernis dans la salle climatisée (50% RH / 23°C). Après un certain temps au bout duquel on considère que le revêtement a suffisamment réagi, on prélève une spatule de billes de verre (environ 0,5 g) et on les verse sur la peinture (ou vernis) appliquée à l'aide d'un petit tuyau de 10 cm de hauteur. Au bout de 10 secondes, on incline le support de 20° et on enlève les billes de verre à l'aide du pinceau fin. Si celles-ci ne restent pas collées, on considère la peinture sèche « hors poussières » à la durée correspondante de séchage après application. Dans le cas contraire, on effectue un autre essai quelques minutes plus tard et ainsi de suite jusqu'à ce qu'aucune bille ne colle à la surface du revêtement pour noter la durée de séchage hors poussières.

5.7) <u>Test de dureté selon la méthode ISO 1522</u>

Il s'agit d'une dureté Persoz réalisée à 23°C et à 50% d'humidité relative. Les vernis sont appliqués sur acier type QD36 (Q-Panel) puis laissés dans les conditions décrites ci-dessus (23°C et à 50% d'humidité relative) pour une période de 7 jours. Les mesures sont réalisées après 1 jour, 3 jours et 7 jours de séchage.

5.8) <u>Calcul des COV</u>

Le taux de COV est le taux en g/l des composés organiques volatils comme définis déjà dans la description et est égal au % en poids desdits composés volatils selon définition du diluant d) multiplié par la densité (en g/ml) de la composition en question et par un facteur 10.

5.9) <u>Application</u>

La formulation de l'exemple 1c est appliquée sur un support acier type QD46 (Q-panel) avec un applicateur Barecoater (Vitesse 3 = 20 mm/s) afin d'obtenir une épaisseur sèche contrôlée de 40 $\pm$ 5 $\mu$m. Le vernis ainsi appliqué est conditionné à une température de 23°C, sous humidité relative (HR) contrôlée de 50%.

6) Evaluation des performances et résultats par formulation testée

Tableau 7 : performances applicatives de la composition réticulable de revêtement de l'exemple 1c

|  | Propriétés du revêtement de l'exemple 1c |
| --- | --- |
| Epaisseur du film sur acier QD46 ($\mu$m) | 41 $\pm$ 1 |
| Séchage hors poussières (min) | 95 |
| Dureté Persoz à 24 h (s) | 89 |
| Dureté Persoz à 3 jours (s) | 151 |
| Dureté Persoz à 7 jours (s) | 177 |

## Revendications

1. Composition de résine polyol, en particulier apte à réagir avec un isocyanate, **caractérisée en ce qu'**elle comprend les composants suivants :

   a) au moins une résine polyol, en particulier acrylique, obtenue par polymérisation d'un mélange de monomères éthyléniquement insaturés comprenant a1) au moins un monomère éthyléniquement insaturé hydroxylé, en particulier acrylique ou un monomère précurseur d'une unité hydroxylée, modifié chimiquement lors de ladite polymérisation ou après et a2) au moins un monomère éthyléniquement insaturé acrylique de structure cycloaliphatique et ladite résine a) ayant les caractéristiques suivantes :

   - un indice de OH allant de 50 à 200, de préférence de 50 à 175 mg KOH/g
   - un indice d'acide < 10 et plus préférentiellement < 5 mg KOH/g
   - Tg calculée selon Fox supérieure à 25°C, de préférence de 30 à 90°C
   - Mn allant de 1000 à 4000, telle que mesurée par GPC

   b) au moins un diluant réactif portant par molécule au moins deux groupements de préférence de 2 à 4, plus préférentiellement de 2 à 3 groupements, susceptibles de réagir avec un groupement isocyanate
   c) au moins un catalyseur de réaction d'uréthanisation, éventuellement en présence d'un cocatalyseur, en particulier c) étant nanoencapsulé, de préférence c) étant exempt d'étain
   d) en option, au moins un diluant de point d'ébullition (pt Eb) inférieur à 250°C qui est choisi parmi les diluants inertes ou non réactifs (c'est-à-dire ne portant aucun groupement pouvant réagir avec un isocyanate) ou parmi les diluants monofonctionnels réactifs porteurs d'un groupement susceptible de réagir avec un groupement isocyanate, en particulier ledit diluant d) étant le solvant résiduel de polymérisation de ladite résine a)
   e) en option, au moins un additif parmi : anti-UV, antioxydant, extendeur de durée de vie en pot (« pot life ») additif de conductivité, inhibiteur de corrosion

   avec ladite composition ayant un taux de composé d), correspondant au taux de composés organiques volatiles (COV), inférieur à 300 g/l à 450 mPa.s à 25°C.

2. Composition selon la revendication 1, **caractérisée en ce que** le taux en poids dudit monomère a2) de structure cycloaliphatique est d'au moins 5% et inférieur à 80% en poids par rapport au poids total des monomères de ladite résine a).

3. Composition selon la revendication 1 ou 2, **caractérisée en ce que** ledit diluant b) a une Tg mesurée par DSC (à 10°C/min après 2 passages) inférieure à -50°C et de préférence allant de -100°C à moins de -50°C, plus préférentiellement de -90 à moins de - 50°C.

4. Composition selon l'une des revendications 1 à 3, **caractérisée en ce que** ledit diluant b) est présent à un taux tel que le rapport en % poids de b/(a+b+c+d+e) varie jusqu'à 60% de préférence jusqu'à 50%, plus préférentiellement de 5 à 50% avec la somme de a)+b)+c)+d)+e) étant égale à 100% et **en ce que** ledit diluant réactif b) a une masse moléculaire ne dépassant pas 1000 et une fonctionnalité moyenne (en nombre) allant de 2 à moins de 4, de préférence de 2 à 3 et plus préférentiellement entre 2 et 2,75.

5. Composition de résine selon l'une des revendications 1 à 4, **caractérisée en ce que** ladite résine polyol acrylique a) est un copolymère dérivé de la polymérisation radicalaire dans un diluant d) d'un mélange de monomères éthylèniquement insaturés, comprenant en plus de a1) et de a2) tels que définis selon revendication 1, a3) au moins un comonomère sélectionné parmi les autres monomères éthyléniquement insaturés, en particulier parmi les monomères (méth)acryliques et/ou monomères vinyliques, de préférence ledit mélange étant à base de monomères (méth)acryliques.

6. Composition selon l'une des revendications 1 à 5, **caractérisée en ce que** ladite résine polyol a) est présente à un taux tel que le rapport en poids a/(a+b+c+d+e) varie de 40 à 90%, de préférence de 50 à 90% avec la somme de a)+b)+c)+d)+e) étant égale à 100%.

7. Composition selon l'une des revendications 1 à 6, **caractérisée en ce que** ledit diluant réactif b) est sélectionné parmi :

   b1) les alcanes polyols ou alcanes polyamines à chaîne linéaire ou ramifiée, alcoxylés ou non alcoxylés, de préférence ayant une longueur de chaîne en $C_2$ à $C_{54}$, plus préférentiellement polyols en $C_{12}$ à $C_{54}$
   b2) les polyols dérivés d'huiles naturelles ou dérivés des acides gras correspondants, en particulier avec une longueur de chaîne allant de $C_{12}$ à $C_{54}$
   b3) les oligoéthers polyols ou oligoimines polyamines
   b4) les oligoesters polyols, en particulier à base de caprolactone ou de glycidyl ester de l'acide neodecanoïque
   b5) les oligouréthane polyols
   b6) les polyoxazolidines, en particulier les bisoxazolidines

   de préférence, le diluant b) étant choisi parmi b2) et/ou b3) et/ou b6).

8. Composition selon l'une des revendications 1 à 7, **caractérisée en ce que** ledit catalyseur c) est choisi parmi :

   c1) les sels métalliques ou complexes métalliques à base de métaux choisi parmi : Bi, Ti, Zn, Zr, Sn, de préférence Bi, Ti, Zn, Zr
   c2) les amines tertiaires

   et de préférence c) étant choisi parmi c1) les sels ou complexes métalliques de Ti ou de Zr et parmi c2) les amines tertiaires.

9. Composition selon l'une des revendications 1 à 8, **caractérisée en ce que** ladite résine polyol a) a une viscosité de 500 à 5000 mPa.s à 25°C pour un taux en poids de résine de 70 ($\pm$ 1) % par rapport au total résine + solvant, de préférence ledit solvant étant tel que défini selon d), en particulier selon d1) et plus particulièrement l'acétate de butyle.

10. Composition réticulable de polyuréthane, **caractérisée en ce qu'**elle comprend :

    A) au moins une composition de résine polyol telle que définie selon l'une des revendications 1 à 9, en tant que composant réactif avec un polyisocyanate B) tel que défini ci-dessous
    B) au moins un polyisocyanate de fonctionnalité (moyenne en nombre) en groupements NCO d'au moins 2, de préférence supérieure à 2, plus préférentiellement entre 2 et 4, ledit polyisocyanate étant éventuellement bloqué et/ou encapsulé

    et de préférence les proportions de A) et B) étant telles que le rapport du nombre total f des fonctions réactives OH de a) et des fonctions de b) réactives avec NCO, sur le nombre total des fonctions isocyanates NCO (f/NCO) varie de 0,8 à 1,3, de préférence de 0,9 à 1,1.

11. Composition réticulable selon la revendication 10, **caractérisée en ce que** le taux de composés d) correspondant au taux de composés organiques volatils (COV) est inférieur à 250 g/l.

12. Composition réticulable selon l'une des revendications 10 ou 11, **caractérisée en ce que** ledit polyisocyanate est sélectionné parmi les polyisocyanates aliphatiques ou cycloaliphatiques, en particulier modifiés allophanate.

**13.** Composition réticulable selon l'une des revendications 10 à 12, **caractérisée en ce que** ledit polyisocyanate comprend un cycle isocyanurate.

**14.** Composition réticulable selon l'une des revendications 10 à 12, **caractérisée en ce que** ledit polyisocyanate B) est un polyisocyanate modifié allophanate et qu'il a une structure suivant formule générale (I) suivante :

$$O=C=N-R_1-N(R_2)-C(=O)-NH-R_1-N=C=O \qquad (I)$$

avec

$R_1$ : alkylène ou cycloalkylène en $C_6$, de préférence alkylène en $C_6$
$R_2$ : -C(=O)-O$R_3$, avec $R_3$ étant le résidu d'un alcool en $C_6$ à $C_{36}$, de préférence alcool gras en $C_{12}$ à $C_{36}$.

**15.** Composition réticulable selon l'une des revendications 10 à 14, **caractérisée en ce que** ledit polyisocyanate est de structure cycloaliphatique.

**16.** Composition de revêtement, **caractérisée en ce qu'**elle comprend au moins une composition réticulable de polyuréthane telle que définie selon l'une des revendications 10 à 15.

**17.** Composition selon la revendication 16, **caractérisée en ce qu'**il s'agit de revêtements de protection ou de décoration et qu'il s'agit d'une composition de peintures, vernis, lasures ou encres.

**18.** Composition de revêtement selon l'une des revendications 16 ou 17, **caractérisée en ce qu'**elle comprend des pigments (organiques ou inorganiques), charges minérales, additifs de rhéologie, agents mouillants, dispersants, agents de surface, agents anti-UV, antioxydants, inhibiteurs de corrosion, absorbeur d'humidité ou agents antimousse.

**19.** Composition selon la revendication 16, **caractérisée en ce qu'**il s'agit de revêtements anticorrosion pour métal.

**20.** Utilisation d'une composition telle que définie selon l'une des revendications 1 à 9, comme composant réactif avec un polyisocyanate, dans des compositions réticulables de revêtements polyuréthanes, avec un taux de COV de ladite composition de revêtements inférieur à 250 g/l.

**21.** Utilisation selon la revendication 20, **caractérisée en ce qu'**il s'agit de revêtements de protection ou de décoration de substrats choisis parmi : métal, verre, plâtre, béton, composite, plastique, bois y compris aggloméré, carton, bitume, fibres ou textile.

**22.** Polyuréthane réticulé, en particulier sous forme de revêtement, **caractérisé en ce qu'**il résulte de l'utilisation d'une composition de résine polyol telle que définie selon l'une des revendications 1 à 9 ou d'une composition réticulable telle que définie selon l'une des revendications 10 à 15 ou d'une composition de revêtement telle que définie selon l'une des revendications 16 ou 17.

**Patentansprüche**

**1.** Polyolharzzusammensetzung, die insbesondere mit einem Isocyanat umgesetzt werden kann, **dadurch gekennzeichnet, dass** sie die folgenden Bestandteile umfasst:

a) mindestens ein Polyolharz, insbesondere Acrylpolyolharz, das durch Polymerisation einer Mischung von ethylenisch ungesättigten Monomeren erhalten wurde, umfassend a1) mindestens ein hydroxyliertes ethylenisch ungesättigtes Monomer, insbesondere Acrylmonomer, oder ein Monomer, das eine Vorstufe einer hydroxylierten Einheit ist, das während der Polymerisation oder danach chemisch modifiziert wurde, und a2) mindestens ein ethylenisch ungesättigtes Acrylmonomer mit cycloaliphatischer Struktur und wobei das Harz a) die folgenden Merkmale aufweist:

- eine OH-Zahl von 50 bis 200, vorzugsweise von 50 bis 175 mg KOH/g
- eine Säurezahl <10 und bevorzugter <5 mg KOH/g
- eine nach Fox berechnete Tg von mehr als 25 °C, vorzugsweise von 30 bis 90 °C

- ein Mn von 1.000 bis 4.000 wie mittels GPC gemessen

b) mindestens ein reaktives Verdünnungsmittel, das pro Molekül 2 bis 4 Gruppen, bevorzugter 2 bis 3 Gruppen trägt, die mit einer Isocyanatgruppe umgesetzt werden können,

c) mindestens einen Katalysator der Urethanisierungsreaktion, gegebenenfalls in Gegenwart eines Cokatalysators, der insbesondere c) nanoverkapselt ist, der vorzugsweise c) zinnfrei ist

d) gegebenenfalls mindestens ein Verdünnungsmittel mit einem Siedepunkt (Sdp.) von weniger als 250 °C, das ausgewählt ist aus inerten oder nicht reaktiven Verdünnungsmitteln (das heißt, die keine Gruppe tragen, die mit einem Isocyanat umgesetzt werden kann) oder aus reaktiven monofunktionellen Verdünnungsmitteln, die eine Gruppe tragen, die mit einer Isocyanatgruppe umgesetzt werden kann, wobei das Verdünnungsmittel d) insbesondere das restliche Polymerisationslösungsmittel des Harzes a) ist

e) gegebenenfalls mindestens ein Additiv aus: UV-Stabilisator, Antioxidationsmittel, Topfzeitverlängerer ("pot life"), Leitfähigkeitsadditiv und Korrosionshemmer

wobei die Zusammensetzung einen Anteil an Verbindung d), der dem Anteil an flüchtigen organischen Verbindungen (VOC) entspricht, von weniger als 300 g/l bei 450 mPa.s bei 25 °C aufweist.

**2.** Zusammensetzung nach Anspruch 1, **dadurch gekennzeichnet, dass** der Gewichtsanteil des Monomers a2) mit cycloaliphatischer Struktur mindestens 5 Gew.-% und weniger als 80 Gew.-%, bezogen auf das Gesamtgewicht der Monomere des Harzes a), beträgt.

**3.** Zusammensetzung nach Anspruch 1 oder 2, **dadurch gekennzeichnet, dass** das Verdünnungsmittel b) eine Tg, gemessen mittels DSC (bei 10 °C/min nach 2 Durchgängen), von weniger als -50 °C und vorzugsweise von -100 °C bis weniger als -50 °C, bevorzugter von -90 bis weniger als -50 °C aufweist.

**4.** Zusammensetzung nach einem der Ansprüche 1 bis 3, **dadurch gekennzeichnet, dass** das Verdünnungsmittel b) in einer solchen Menge vorliegt, dass das Verhältnis in Gew.-% von b/(a+b+c+d+e) bis zu 60 %, vorzugsweise bis zu 50 %, bevorzugter von 5 bis 50 % reicht, wobei die Summe von a)+b)+c)+d)+e) gleich 100 % ist, und dadurch, dass das reaktive Verdünnungsmittel b) ein Molekulargewicht von nicht mehr als 1.000 und eine (zahlengemittelte) Funktionalität von 2 bis weniger als 4, vorzugsweise von 2 bis 3 und bevorzugt zwischen 2 und 2,75 aufweist.

**5.** Harzzusammensetzung nach einem der Ansprüche 1 bis 4, **dadurch gekennzeichnet, dass** das Acrylpolyolharz a) ein Copolymer ist, das von der radikalischen Polymerisation in einem Verdünnungsmittel d) einer Mischung von ethylenisch ungesättigten Monomeren abgeleitet ist, die zusätzlich zu a1) und a2) nach Anspruch 1, a3) mindestens ein Comonomer umfasst, das aus den anderen ethylenisch ungesättigten Monomeren, insbesondere aus den (Meth)acrylmonomeren und/oder Vinylmonomeren ausgewählt ist, wobei die Mischung vorzugsweise aus (Meth)acrylmonomeren besteht.

**6.** Zusammensetzung nach einem der Ansprüche 1 bis 5, **dadurch gekennzeichnet, dass** das Polyolharz a) in einer solchen Menge vorliegt, dass das Gewichtsverhältnis von a/(a+b+c+d+e) von 40 bis 90 %, vorzugsweise von 50 bis 90 % reicht, wobei die Summe von a)+b)+c)+d)+e) gleich 100 % ist.

**7.** Zusammensetzung nach einem der Ansprüche 1 bis 6, **dadurch gekennzeichnet, dass** das reaktive Verdünnungsmittel b) ausgewählt ist aus:

b1) alkoxylierten oder nicht-alkoxylierten linearen oder verzweigtkettigen Alkanpolyolen oder Alkanpolyaminen, die vorzugsweise eine Kettenlänge von $C_2$ bis $C_{54}$ aufweisen, bevorzugt $C_{12}$- bis $C_{54}$-Polyole

b2) Polyolen, die von natürlichen Ölen oder Derivaten der entsprechenden Fettsäuren, insbesondere mit einer Kettenlänge im Bereich von $C_{12}$ à $C_{54}$, abgeleitet sind

b3) Oligoetherpolyolen oder Oligoiminpolyaminen

b4) Oligoesterpolyolen, insbesondere auf Basis von Caprolacton oder Neodecansäure-Glycidylester

b5) Oligourethanpolyolen

b6) Polyoxazolidinen, insbesondere Bisoxazolidinen

wobei das Verdünnungsmittel b) vorzugsweise aus b2) und/oder b3) und/oder b6) ausgewählt ist.

**8.** Zusammensetzung nach einem der Ansprüche 1 bis 7, **dadurch gekennzeichnet, dass** der Katalysator c) ausgewählt ist aus:

c1) Metallsalzen oder Metallkomplexen, die aus Metallen bestehen, die ausgewählt sind aus: Bi, Ti, Zn, Zr, Sn, vorzugsweise Bi, Ti, Zn, Zr
c2) tertiären Aminen

und vorzugsweise c) ausgewählt sind aus c1) Metallsalzen oder Komplexen von Ti oder Zr und aus c2) tertiären Aminen.

9. Zusammensetzung nach einem der Ansprüche 1 bis 8, **dadurch gekennzeichnet, dass** das Polyolharz a) eine Viskosität von 500 bis 5.000 mPa.s bei 25 °C für einen Harzanteil von 70($\pm$1) Gew.-%, bezogen auf die Summe aus Harz + Lösungsmittel, aufweist, wobei das Lösemittel vorzugsweise gemäß d), insbesondere gemäß d1) definiert ist, und bevorzugter Butylacetat ist.

10. Vernetzbare Polyurethanzusammensetzung, **dadurch gekennzeichnet, dass** sie umfasst:

A) mindestens eine Polyolharzzusammensetzung, wie gemäß einem der Ansprüche 1 bis 9 definiert, als Bestandteil, der mit einem Polyisocyanat B), wie nachfolgend definiert, umgesetzt werden kann
B) mindestens ein Polyisocyanat mit einer (zahlengemittelten) Funktionalität an NCO-Gruppen von mindestens 2, vorzugsweise mehr als 2, bevorzugter zwischen 2 und 4, wobei das Polyisocyanat gegebenenfalls blockiert und/oder verkapselt ist

und wobei die Anteile von A) und B) vorzugsweise so sind, dass das Verhältnis der Gesamtzahl f der reaktiven Funktionen OH von a) und der mit NCO reaktiven Funktionen von b) zur Gesamtzahl der NCO-Isocyanatfunktionen (f/NCO) von 0,8 bis 1,3, vorzugsweise von 0,9 bis 1,1 reicht.

11. Vernetzbare Zusammensetzung nach Anspruch 10, **dadurch gekennzeichnet, dass** der Anteil an Verbindungen d), der dem Anteil an flüchtigen organischen Verbindungen (VOC) entspricht, weniger als 250 g/l beträgt.

12. Vernetzbare Zusammensetzung nach einem der Ansprüche 10 oder 11, **dadurch gekennzeichnet, dass** das Polyisocyanat ausgewählt ist aus aliphatischen oder cycloaliphatischen Polyisocyanaten, insbesondere modifiziertem Allophanat.

13. Vernetzbare Zusammensetzung nach einem der Ansprüche 10 bis 12, **dadurch gekennzeichnet, dass** das Polyisocyanat einen Isocyanurat-Ring umfasst.

14. Vernetzbare Zusammensetzung nach einem der Ansprüche 10 bis 12, **dadurch gekennzeichnet, dass** das Polyisocyanat B) ein Allophanat-modifiziertes Polyisocyanat ist, und dass es eine Struktur gemäß der folgenden allgemeinen Formel (I) aufweist:

$$O=C=N-R_1-N(R_2)-C(=O)-NH-R_1-N=C=O \qquad (I)$$

wobei

$R_1$ : $C_6$-Alkylen oder -Cycloalkylen, vorzugsweise $C_6$-Alkylen
$R_2$: -C(=O)-OR$_3$, wobei $R_3$ der Rest eines $C_6$- bis $C_{36}$-Alkohols, vorzugsweise eines $C_{12}$- bis $C_{36}$-Fettalkohols ist

15. Vernetzbare Zusammensetzung nach einem der Ansprüche 10 bis 14, **dadurch gekennzeichnet, dass** das Polyisocyanat eine cycloaliphatische Struktur aufweist.

16. Beschichtungszusammensetzung, **dadurch gekennzeichnet, dass** sie mindestens eine vernetzbare Polyurethanzusammensetzung umfasst, wie gemäß einem der Ansprüche 10 bis 15 definiert.

17. Zusammensetzung nach Anspruch 16, **dadurch gekennzeichnet, dass** es sich um schützende oder dekorative Beschichtungen handelt, und dass es sich um eine Zusammensetzung für Farben, Lacke, Lasuren oder Druckfarben handelt.

18. Beschichtungszusammensetzung nach einem der Ansprüche 16 oder 17, **dadurch gekennzeichnet, dass** sie (organische oder anorganische) Pigmente, mineralische Füllstoffe, Rheologieadditive, Netzmittel, Dispergiermittel, Tenside, UV-Stabilisatoren, Antioxidationsmittel, Korrosionshemmer, Feuchtigkeitsabsorber oder Antischaummittel umfasst.

19. Zusammensetzung nach Anspruch 16, **dadurch gekennzeichnet, dass** es sich um Antikorrosionsbeschichtungen für Metall handelt.

20. Verwendung einer Zusammensetzung wie gemäß einem der Ansprüche 1 bis 9 definiert, mit einem Polyisocyanat als reaktivem Bestandteil in vernetzbaren Zusammensetzungen von Polyurethanbeschichtungen mit einem VOC-Gehalt der Beschichtungszusammensetzung von weniger als 250 g/l.

21. Verwendung nach Anspruch 20, **dadurch gekennzeichnet, dass** es sich um schützende oder dekorative Beschichtungen für Untergründe handelt, ausgewählt aus: Metall, Glas, Gips, Beton, Verbundstoff, Kunststoff, Holz, einschließlich Holzspanwerkstoff, Karton, Bitumen, Fasern oder Textil.

22. Vernetztes Polyurethan, insbesondere in Form einer Beschichtung, **dadurch gekennzeichnet, dass** es aus der Verwendung einer Polyolharzzusammensetzung wie gemäß einem der Ansprüche 1 bis 9 definiert, oder einer vernetzbaren Zusammensetzung wie gemäß einem der Ansprüche 10 bis 15 definiert, oder einer Beschichtungszusammensetzung, wie gemäß einem der Ansprüche 16 bis 17 definiert, entsteht.


**Claims**

1. Polyol resin composition, which is in particular capable of reacting with an isocyanate, **characterized in that** it comprises the following components:

  a) at least one polyol resin, in particular an acrylic resin, obtained by polymerization of a mixture of ethylenically unsaturated monomers comprising a1) at least one hydroxylated ethylenically unsaturated monomer, in particular an acrylic monomer or a monomer that is a precursor of a hydroxylated unit, chemically modified during said polymerization or after, and a2) at least one ethylenically unsaturated acrylic monomer of cycloaliphatic structure and said resin a) having the following characteristics:

    - an OH number ranging from 50 to 200, preferably from 50 to 175 mg KOH/g
    - an acid number < 10 and more preferentially < 5 mg KOH/g
    - a Tg calculated according to Fox of greater than 25°C, preferably from 30 to 90°C
    - an Mn ranging from 1000 to 4000, as measured by GPC

  b) at least one reactive diluent bearing per molecule at least two groups, preferably from 2 to 4 and more preferentially from 2 to 3 groups that are capable of reacting with an isocyanate group
  c) at least one urethanization reaction catalyst, optionally in the presence of a cocatalyst, in particular c) being nanoencapsulated, preferably c) being free of tin
  d) optionally, at least one diluent with a boiling point (b.p.) of less than 250°C, which is chosen from inert or unreactive diluents (i.e. not bearing any group that can react with an isocyanate) or from reactive monofunctional diluents bearing a group that can react with an isocyanate group, in particular said diluent d) being the residual polymerization solvent for said resin a)
  e) optionally, at least one additive from among: UV stabilizer, antioxidant, pot life extender, conductivity additive or corrosion inhibitor

  with said composition having a content of compound d) corresponding to the content of volatile organic compounds (VOC) of less than 300 g/l at 450 mPa.s at 25°C.

2. Composition according to Claim 1, **characterized in that** the weight content of said monomer a2) of cycloaliphatic structure is at least 5% and less than 80% by weight relative to the total weight of the monomers of said resin a).

3. Composition according to Claim 1 or 2, **characterized in that** said diluent b) has a Tg measured by DSC (at 10°C/min after 2 passes) of less than -50°C, preferably ranging from -100°C to less than -50°C, more preferentially from -90 to less than -50°C.

4. Composition according to one of Claims 1 to 3, **characterized in that** said diluent b) is present in a content such that the percentage weight ratio of b/(a + b + c + d + e) ranges up to 60%, preferably up to 50%, more preferentially from 5% to 50% with the sum of a) + b) + c) + d) + e) being equal to 100% and **in that** said reactive diluent b) has a molecular mass not exceeding 1000 and a (number-) average functionality ranging from 2 to less than 4, preferably from 2 to 3 and more preferentially between 2 and 2.75.

5. Resin composition according to one of Claims 1 to 4, **characterized in that** said acrylic polyol resin a) is a copolymer derived from the radical polymerization in a diluent d) of a mixture of ethylenically unsaturated monomers, comprising, in addition to a1) and a2) as defined according to Claim 1, a3) at least one comonomer selected from the other ethylenically unsaturated monomers, in particular from (meth)acrylic monomers and/or vinyl monomers, said mixture preferably being based on (meth)acrylic monomers.

6. Composition according to one of Claims 1 to 5, **characterized in that** said polyol resin a) is present in a content such that the weight ratio a/(a + b + c + d + e) ranges from 40% to 90%, preferably from 50% to 90%, with the sum of a) + b) + c) + d) + e) being equal to 100%.

7. Composition according to one of Claims 1 to 6, **characterized in that** said reactive diluent b) is selected from:

   b1) polyol alkanes or polyamine alkanes bearing a linear or branched chain, which are alkoxylated or non-alkoxylated, preferably with a chain length of $C_2$ to $C_{54}$, more preferentially $C_{12}$ to $C_{54}$ polyols
   b2) polyols derived from natural oils or derivatives of the corresponding fatty acids, in particular with a chain length ranging from $C_{12}$ to $C_{54}$
   b3) polyol oligoethers or oligoimine polyamines
   b4) polyol oligoesters, in particular based on caprolactone or neodecanoic acid glycidyl ester
   b5) polyol oligourethanes
   b6) polyoxazolidines, in particular bisoxazolidines preferably the diluent b) is chosen from b2) and/or b3) and/or b6).

8. Composition according to one of Claims 1 to 7, **characterized in that** said catalyst c) is chosen from:

   c1) metal salts or metal complexes based on metals chosen from: Bi, Ti, Zn, Zr, Sn, preferably Bi, Ti, Zn, Zr
   c2) tertiary amines

   and preferably c) is chosen from c1) metal salts or complexes of Ti or of Zr and from c2) tertiary amines.

9. Composition according to one of Claims 1 to 8, **characterized in that** said polyol resin a) has a viscosity of from 500 to 5000 mPa.s at 25°C for a weight content of resin of 70% ($\pm$ 1%) relative to the total resin + solvent, said solvent preferably being as defined according to d), in particular according to d1) and more particularly butyl acetate.

10. Crosslinkable polyurethane composition, **characterized in that** it comprises:

    A) at least one polyol resin composition as defined according to one of Claims 1 to 9, as component that is reactive with a polyisocyanate B) as defined below
    B) at least one polyisocyanate with a functionality (number-average) of NCO groups of at least 2, preferably greater than 2, more preferentially between 2 and 4, said polyisocyanate being optionally blocked and/or encapsulated,

    and preferably the proportions of A) and B) being such that the ratio of the total number f of the reactive OH functions of a) and of the functions of b) that are reactive with NCO to the total number of isocyanate functions NCO (f/NCO) ranges from 0.8 to 1.3 and preferably from 0.9 to 1.1.

11. Crosslinkable composition according to Claim 10, **characterized in that** the content of compounds d) corresponding to the content of volatile organic compounds (VOCs) is less than 250 g/l.

12. Crosslinkable composition according to either of Claims 10 and 11, **characterized in that** said polyisocyanate is selected from aliphatic or cycloaliphatic polyisocyanates, in particular allophanate-modified polyisocyanates.

13. Crosslinkable composition according to one of Claims 10 to 12, **characterized in that** said polyisocyanate comprises an isocyanurate ring.

14. Crosslinkable composition according to one of Claims 10 to 12, **characterized in that** said polyisocyanate B) is an allophanate-modified polyisocyanate and that it has a structure according to the general formula (I) below:

$$O=C=N-R_1-N(R_2)-C(=O)-NH-R_1-N=C=O \qquad (I)$$

with

$R_1$: $C_6$ alkylene or cycloalkylene, preferably $C_6$ alkylene
$R_2$: -C(=O)-OR$_3$, with $R_3$ being a $C_6$ to $C_{36}$ alcohol residue, preferably a $C_{12}$ to $C_{36}$ fatty alcohol.

15. Crosslinkable composition according to one of Claims 10 to 14, **characterized in that** said polyisocyanate is of cycloaliphatic structure.

16. Coating composition, **characterized in that** it comprises at least one crosslinkable polyurethane composition as defined according to one of Claims 10 to 15.

17. Composition according to Claim 16, **characterized in that** it is a protective or decorative coating and that it is a paint, varnish, lacquer or ink composition.

18. Coating composition according to either of Claims 16 and 17, **characterized in that** it comprises pigments (organic or inorganic), mineral fillers, rheology additives, wetting agents, dispersants, surface agents, UV stabilizers, antioxidants, corrosion inhibitors, moisture absorbers or antifoams.

19. Composition according to Claim 16, **characterized in that** it is an anticorrosion coating for metal.

20. Use of a composition as defined in one of Claims 1 to 9, as component that is reactive with a polyisocyanate, in crosslinkable polyurethane coating compositions, with a VOC content of said coating composition of less than 250 g/l.

21. Use according to Claim 20, **characterized in that** it is a coating for protecting or decorating substrates chosen from: metal, glass, plaster, concrete, composite, plastic, wood including agglomerate, cardboard, bitumen, fibers or textile.

22. Crosslinked polyurethane, in particular in the form of a coating, **characterized in that** it results from the use of a polyol resin composition as defined in one of Claims 1 to 9 or of a crosslinkable composition as defined in one of Claims 10 to 15 or of a coating composition as defined in either of Claims 16 and 17.

## RÉFÉRENCES CITÉES DANS LA DESCRIPTION

**Documents brevets cités dans la description**

- WO 0138415 A
- EP 1178080 A
- US 6015871 A
- WO 2007020269 A

**Littérature non-brevet citée dans la description**

- *Macromolecules,* 2008, vol. 41, 9650-9655